(19) Europäisches Patentamt
European Patent Office
Office européen des brevets

(11) Veröffentlichungsnummer: **0 152 007**
**A2**

(12) # EUROPÄISCHE PATENTANMELDUNG

(21) Anmeldenummer: 85100868.0

(22) Anmeldetag: 29.01.85

(51) Int. Cl.[4]: C 04 B 41/63
B 27 K 3/15, B 27 K 3/34

(30) Priorität: 11.02.84 DE 3404951

(43) Veröffentlichungstag der Anmeldung:
21.08.85 Patentblatt 85/34

(84) Benannte Vertragsstaaten:
AT DE FR GB NL SE

(71) Anmelder: Röhm GmbH
Kirschenallee Postfach 4242
D-6100 Darmstadt 1(DE)

(72) Erfinder: Elser, Wilhelm
Am Sportfeld 1
D-6103 Griesheim(DE)

(72) Erfinder: Rossberg, Peter, Dr.
Eckweg 1
D-6104 Seeheim-Jugenheim(DE)

(72) Erfinder: Wicke, Michael
Im Sandacker 7
D-6104 Seeheim-Jugenheim(DE)

(54) **Verfahren zur Beschichtung von saugfähigen Untergründen mit nasshaftenden Anstrichsystemen.**

(57) Die Erfindung betrifft ein Verfahren zur Beschichtung von saugfähigen Untergründen aus mineralischen Materialien oder aus Holz mit naßhaftenden Beschichtungssystemen, wobei eine Grundierung bestehend aus der Lösung L eines Copolymerisats P aus radikalisch polymerisierbaren Monomeren vom Typ der Acryl- und der Methacrylsäureester, des gegebenenfalls substituierten Styrols und der Vinylester und aus Monomeren vom Typ der Dialkylaminoalkylester der Acryl- und der Methacrylsäure und der entsprechenden Amide mit der Maßgabe, daß der $T_{\lambda max}$-Wert des Copolymerisats P im Bereich 20 °C bis 80 °C liegt und die reduzierte Viskosität $\eta_{spez/c}$ des Copolymerisats P im Bereich 20 ml/g bis 60 ml/g liegt, in organischen Lösungsmitteln LM mit einem Siedepunkt unter Normalbedingungen zwischen 50 und 180 °C, wobei der Anteil des Copolymerisats P an der Lösung L 5 bis 30 Gew.-% ausmacht, aufgebracht wird und anschließend nach erfolgter Trocknung auf die Grundierung wäßrige Dispersionslacke oder Dispersionsfarben aufgetragen wird.

# Verfahren zur Beschichtung von saugfähigen Untergründen mit naßhaftenden Anstrichsystemen

## Gebiet der Erfindung

Die Erfindung betrifft ein Verfahren zur Beschichtung von saugfähigen Untergründen aus mineralischem Material oder aus Holz mit einem naßhaftenden Anstrichsystem.

## Stand der Technik

Die Beschichtung von mineralischen Untergründen und von Holz mit Anstrichmitteln wird seit langem ausgeübt. Die früher üblichen Ölanstrichstoffe sind weitgehend von Dispersionsanstrichstoffen verdrängt worden. Für Außenanstriche auf mineralischen Untergründen werden hauptsächlich Polyvinylacetat und Copolymerisate des Vinylacetats mit Maleinsäureestern, Versaticsäurevinylester, (Meth)acrylsäureestern, Ethylen oder Vinylchlorid, Polymerisate des Vinylpropionats bzw. Copolymerisate mit (Meth)acrylsäureestern oder Vinylchlorid, Poly(meth)acrylate, Styrol-(Meth)acrylsäureestercopolymerisate sowie Copolymerisate des Styrols mit Butadien verwendet. Für Holz werden heute bereits in gewissem Umfang sogenannte Dispersionslacke auf Acrylharzbasis, nach wie vor aber noch in großem Umfang Alkydlacksysteme eingesetzt.

Den Dispersionsfarben wird allgemein eine relativ gute Haftung auf Untergründen zugeschrieben. (Vgl. Ullmanns Encyklopädie der Techn. Chemie, 4. Auflage, Band 15, S. 665-668, Verlag

Chemie). In der praktischen Anwendung stößt man indessen auf Schwierigkeiten, die mit dem Zustand des Untergrunds zusammenhängen.

Unter dem Aspekt der Dauerhaftigkeit von Anstrichen spielt die Naßhaftung eine äußerst wichtige Rolle. Sie läßt bei Beschichtung mit Dispersionsfarben, vor allem auch auf weniger gut tragfähigen Substraten häufig zu wünschen übrig. Man ist daher teilweise zur Beschichtung mit Anstrichsystemen übergegangen, die eine Grundierung mit einem sogenannten "Primer", gefolgt vom Aufbringen der Dispersionsfarbe vorsieht. Als "Primer" werden bisher vorwiegend organische Lösungen aus Homo- und vor allem Copolymerisaten des Vinylacetats, aus Acrylharzen, aber neuerdings auch zum Teil wäßrige Dispersionen extrem feinteiliger Kunstharze, beispielsweise auf Acrylharzbasis, angewendet. Es erschien überhaupt nicht naheliegend, die Naßhaftung im Sinne von Frühwasserfestigkeit bei Regenbeanspruchung bzw. von Blasenfreiheit bei rückwärtiger Feuchtigkeitsbeanspruchung durch Steigerung der Hydrophilie der Bindemittel entsprechender Grundierungen zu erhöhen. Es überrascht deshalb nicht, daß relativ hydrophile Comonomere wie die aminogruppenhaltigen (Meth)acrylsäureester keinen Eingang bei der Herstellung von Harzlösungen gefunden haben, die als Grundierungen im beschriebenen Sinne Verwendung finden.

In der JP-OS 80-99 983 (vgl. Chem.Abstr. 94, 5005f) wird ein Anstrichsystem empfohlen, bei dem zunächst Copolymere aus polymerisationsfähigen OH-aktiven Gruppen und (Meth)acrylsäureestern mit Polyisocyanaten zur Reaktion gebracht und das Reaktionsprodukt als Primer auf Beton aufgetragen wird. Auf diesen bringt man anschließend eine Polyurethanbeschichtung auf. Ebenfalls mit Isocyanaten modifizierte Acrylat-Präpolymere sollen gemäß JP-OS 80-125 176 (vgl. Chem.Abstr. 94, 67 427d) als Primer zur Beschichtung von Beton verwendet werden.

Beispielsweise werden 30 Tl. Butylacrylat, 70 Tl Methylmethacrylat, 14,1 Tl. 2-(tert.-Butylamino)ethylmethacrylat in Gegenwart von 2-Aminoethanthiol in Toluol polymerisiert und mit 25,2 Tl. Diphenylmethandiisocyanat und 0,1 Tl. Zinnoctoat erhitzt, mit Essigester verdünnt und auf Beton appliziert. Die Deckbeschichtung wird anschließend mit Urethankautschuk vorgenommen.
Mit Wasser verdünnbare Anstrichmittel als Primer für Zement-Baumaterialien sind Gegenstand der JP-OS 82-65 762 (vgl. Chem.Abstr. 97, 129 261t). So wird zum Beispiel eine Lösung eines Copolymers aus Butylacrylat, Diethylaminoethyl-methacrylat, Methylmethacrylat mit Ameisensäure neutralisiert und mit Wasser auf einen Festkörpergehalt von 15 % gebracht. Das zu beschichtende Material wird ca. 1 Stunde in diese Lösung getaucht.

Die Beschichtung von Beton mit kationischen Dispersionen von Copolymerisaten mit oder ohne Aminogruppen als Primer und einem Überzug aus Acrylharz ist Gegenstand des JP-OS 79-116 021 (vgl. Chem.Abstr. 92, 112 366e). Beispielhaft belegt ist die Anwendung von einem wäßrigen System eines Copolymeren aus 60 Tln. 2-Ethylhexylacrylat, 40 Tln. Methylmethacrylat, 3 Tln. 2-(Dimethylamino)ethylmethacrylat und Octadecyltrimethylammoniumchlorid als Primer, auf den anschließend ein Acrylharz in Emulsion aufgebracht wird. Die Verwendung von Farbmitteln läßt sich dem genannten Stand der Technik nicht entnehmen.

Holz als Substrat wird gemäß JP-OS 80-39 239 (vgl. Chem.Abstr. 93, 96 934b mit einer Mischung aus aliphatischen Diaminen, Glycidylestern von ungesättigten Säuren und Radikalinitiatoren vorbehandelt und anschließend mit Polyurethan- oder Alkydharz beschichtet.

Aufgabe

Die der vorliegenden Erfindung zugrundeliegende Aufgabe betrifft insbesondere Tiefgrundierungen und Dispersionsfarben bzw. -lacke für Anstriche auf saugfähigen Untergründen. Erfahrungsgemäß genügen die bisher angewendeten Tiefgrundierungen, beispielsweise auf Polyvinylacetatbasis, insbesondere hinsichtlich ihrer Naßhaftung den Anforderungen der Technik nur unvollkommen. Zu beanstanden ist in der Regel ungenügende Frühwasserfestigkeit bei Regenbeanspruchung. Bei rückwärtiger Feuchtigkeitsbeanspruchung ist die unbedingt zu fordernde Blasenfreiheit nicht gewährleistet.
Das Problem stellt sich besonders bei saugfähigen Untergründen aus mineralischem Material, wie es überwiegend auf dem Bausektor verwendet wird, beispielsweise Natursteinen, Mauerwerk, Putz, Beton, Zement, Asbestzement bzw. Mineralfaserzement und sonstige zementgebundene Fasern enthaltende Materialien, Ziegel, Gips sowie bei Holz. Wesentlich andere Bedingungen findet man bei nicht saugfähigen Substraten wie Metallen und der Mehrheit der Kunststoffe vor.

Es bestand die Aufgabe, naßhaftende, frühwasserfeste Anstrichsysteme zur Beschichtung von saugfähigen Untergründen aus mineralischen Materialien oder aus Holz zur Verfügung zu stellen.
Zur Lösung der vorliegenden Aufgabe wird ein Verfahren vorgeschlagen, wonach auf dem saugfähigen Untergrund eine Grundierung G (Primer) aufgebracht wird,
bestehend aus der Lösung L
eines Copolymerisats P aus Monomeren der Formel I

$$CH_2 = \overset{R_1}{\overset{|}{C}} - Z \qquad I$$

worin $R_1$ für Wasserstoff oder einen Methylrest und

Z für einen Rest $-\overset{O}{\overset{\|}{C}}-OR_2$, worin $R_2$ einen gegebenenfalls verzweigten, gegebenenfalls cyclischen Alkylrest mit 1 bis 10 Kohlenstoffatomen bedeutet,

oder für einen gegebenenfalls mit Alkylresten mit 1 bis 4 Kohlenstoffatomen substituierten Phenylrest oder für einen Rest

$-O-\overset{O}{\overset{\|}{C}}-R_3$, worin $R_3$ einen Alkylrest mit 1 bis 8 Kohlenstoffatomen bedeutet, steht, und aus Monomeren der Formel II

$$CH_2 = \overset{R_1'}{\overset{|}{C}} - \overset{O}{\overset{\|}{C}} - Y - A - NR_4R_5 \qquad II$$

worin $R_1'$ für Wasserstoff oder einen Methylrest,

Y für Sauerstoff oder einen Rest $-\overset{|}{N}R_6$, worin $R_6$ Wasserstoff oder einen Alkylrest mit 1 bis 6 Kohlenstoffatomen bedeutet,

A für eine gegebenenfalls verzweigte, aliphatische Kohlenwasserstoffbrücke mit 2 bis 10 Kohlenstoffatomen, und

$R_4$ und $R_5$ unabhängig voneinander für einen Alkylrest mit 1 bis 6 Kohlenstoffatomen steht oder $R_4$ und $R_5$ gemeinsam unter Einbeziehung des Stickstoffs und gegebenenfalls weiterer Stickstoff- oder Sauerstoffatome einen fünf- oder sechsgliedrigen, heterocyclischen Ring bilden,

in Anteilen von 0,5 - 20 Gew.-%, bezogen auf das gesamte Copolymerisat P mit der Maßgabe, daß der $T_{\lambda max}$-Wert des Copolymerisats P im Bereich 20°C bis 80°C liegt und die reduzierte Viskosität $\eta_{spez/c}$ des Copolymerisats P im Bereich 20 ml/g bis 60 ml/g liegt, und 0 - 15 Gew.-%, bezogen auf die Lösung L eines Pigmentes oder eines organischen Farbstoffs,

in organischen Lösungsmitteln LM mit einem Siedepunkt unter Normalbedingungen zwischen 50 und 180°C, wobei der Anteil des Copolymerisats P an der Lösung L 5 - 30 Gew.-% ausmacht und anschließend nach erfolgter Trocknung auf die Grundierung an sich bekannte wäßrige Dispersionslacke D oder Dispersionsfarben DF aufträgt. Die dynamische Einfriertemperatur $T_{\lambda max}$ wird nach DIN 53 445/DIN 7724 bestimmt.

Bei den saugfähigen Untergründen handelt es sich, wie bereits ausgeführt, um solche aus mineralischem Material (z.B. Naturstein, Mauerwerk, Ziegel, Putz, Beton, Zement, Asbestzement bzw. Mineralfaserzement und sonstige faserhaltige Mineralien, Gips) oder um Holz.

Im allgemeinen wird der Auftrag der polymerisathaltigen Lösung L so bemessen, daß auf den m² Substrat 2 - 15 g, vorzugsweise 2 - 10 g, Copolymerisat P entfällt. Es sollte jedoch zweckmäßigerweise darauf geachtet werden, daß sich im Anschluß an den Auftrag der polymerisathaltigen Lösung L kein Oberflächenfilm aus dem Polymerisat P bildet. Die erfindungsgemäß verwendeten Harzlösungen dringen tief in die jeweiligen Substrate ein. Die Copolymerisate P sind durch radikalische Polymerisation in an sich bekannter Weise aus den Monomeren der Formeln I und II zugänglich.

Dabei machen die Monomeren der Formel I in der Regel 99,5 - 80 Gew.-% des gesamten Copolymerisats P aus. Umfaßt ist die Anwendung mehrerer Monomerer der Formel I in einem Copolymerisat P, wobei der $T_{\lambda max}$-Wert, wie angegeben einzuhalten ist. Von besonderer Bedeutung als Monomer der Formel I ist das Methylmethacrylat. Genannt seien weiter insbesondere Methacrylsäureester mit $C_2$-$C_8$-Alkoholen und Acrylsäureester mit $C_1$-$C_8$-Alkoholen. Von Interesse sind ferner die Ester der (Meth)acrylsäure von Ethanol, n- und iso-Propanol, n- und iso-Butanol, Hexylalkohol, Cyclohexylalkohol, Ethylhexylalkohol, insbesondere das n-Butylacrylat und -methacrylat.
Weiter seien genannt Styrol und seine alkylierten Derivate, beispielsweise das α-Methylstyrol und das p-Methylstyrol. Weiter kommen Vinylester von Fettsäuren, insbesondere Vinylacetat und Vinylpropionat zur Anwendung.

Bei den Monomeren der Formel II handelt es sich vorzugsweise um Dialkylaminoalkyl-acrylate und -methacrylate.
Genannt seien beispielhaft 2-Dimethylamino- und 2-Diethylaminoethylacrylat oder -methacrylat, 2-Dimethylamino- und 2-Diethylaminopropylacrylat oder -methacrylat, 2-t-Butylaminoethyl-acrylat oder -methacrylat sowie die 3-Dialkylamino-2,2-dimethylpropyl-1-acrylate und -methacrylate, speziell die 3-Dimethylamino- und die 3-Diethylaminoverbindung und die den vorstehend genannten Verbindungen entsprechenden Amide (Y = $\overset{|}{N}R_6$), worin $R_6$ für Wasserstoff, Methyl oder Ethyl steht. Von Interesse ist ferner das Morpholinethyl-(meth)acrylat sowie die entsprechenden Amide. Besonders interessante Copolymerisate P stellen z.B. solche dar, die aus Methylmethacrylat, n-Butylacrylat, n-Butylmethacrylat und 3-Dialkylamino-2,2-dimethylpropyl-1-(meth)acrylaten aufgebaut sind, etwa im Gewichtsverhältnis (30 ± 5) : (25 ± 5) : (37 ± 6) : (8 ± 2).

Die Bestimmung der $T_{\lambda max}$-Werte wird nach DIN 53 445/DIN 7724 durchgeführt. Die Messung der reduzierten Viskosität $\eta_{spez/c}$ erfolgt nach DIN 1342, DIN 51 562 und DIN 7 745 (vgl. Houben-Weyl, Bd. 14/1, pp 81-84, Georg-Thieme-Verlag, Stuttgart, 1961). Werte der reduzierten Viskosität von $< 20$ für das Copolymerisat P sind im allgemeinen ein Indiz für verringerte Haftung im Gefolge von Wassereinwirkung.

Bei den zur Herstellung der Lösungen L geeigneten Lösungsmitteln mit einem Siedepunkt im Bereich 50 bis 180°C unter Normalbedingungen (760 mm Hg) handelt es sich vorzugsweise um s a u e r s t o f f - haltige Lösungsmittel, beispielsweise aus der Gruppe der Ester, Äther und Ketone sowie um aromatische oder aromatenhaltige Lösungsmittel. Genannt seien insbesondere Ethylacetat, Butylacetat.

Der Zusatz der Pigmente oder organischen Farbstoffe zur Lösung L dient primär dazu, die grundierte Fläche von einer nicht grundierten zu unterscheiden. Hinsichtlich der verwendbaren Pigmente und/oder organischen Farbstoffe herrscht somit eine weitgehend beliebige Auswahl. Genannt seien beispielsweise Phthalocyaninblau und Phthalocyaningrün.

Auf den Zusatz der oben genannten Farbmittel kann aber auch völlig verzichtet werden, ohne die Lösung der gestellten Aufgabe zu beeinträchtigen.
Gegebenenfalls kann auch ein mehrfacher Auftrag der Lösung L auf den Substraten vorgenommen werden.

Die folgenden Beispiele dienen zur Erläuterung der Herstellung des Tiefgrundes (Grundierung)

Beispiel 1

In einem Witt'schen Topf mit Ankerblattrührer, Thermometer und Rückflußkühler werden 460 g Äthylacetat (mit 4 g Trockeneis entgast) vorgelegt und aufgeheizt. Bei 77°C werden 0,64 g tert.-Butylperoctoat in 10 g Äthylacetat zugegeben und mit dem Zulauf eines Gemisches von 99,2 g Methacrylsäuremethylester, 80,0 g Acrylsäurebutylester, 116,5 g Methacrylsäurebutylester, 24,3 g 3-Dimethylamino-2,2-dimethylpropyl-1-methacrylat, 3,2 g tert.-Butylperoctoat und 0,16 g 2-Mercaptoäthanol begonnen.
Die Zulaufdauer beträgt 2 Stunden. Nach Zulaufende werden dann nochmals 0,64 g tert.-Butylperoctoat in 10 g Äthylacetat zugegeben und die Sumpftemperatur weitere 8 Stunden bei 80°C gehalten. Es wird eine klare, gelbliche Lösung erhalten.
Festkörper-Gehalt ca. 40 %, aktuelle Viskosität ca. 700 mPa.s; $\eta_{sp/c}$ in Aceton ca. 33 ml/g. $T_{\lambda max}$ = 62 °C.

Beispiel 2

Durchführung wie unter Beispiel 1, aber unter Zulauf eines Gemisches von 99,2 g Methylmethacrylat, 80,0 g Butylacrylat, 120,0 g Butylmethacrylat, 20,8 g N-Dimethylaminopropylmethacrylamid, 3,2 tert.-Butylperoctoat und 0,32 g 2-Mercaptoäthanol, Festkörpergehalt ca. 40 %, ca. 450 mPa.s; $\eta_{sp/c}$ in Aceton ca. 32 ml/g. $T_{\lambda max}$ = 65 °C.

Beispiel 3

In einem Witt'schen Topf mit Ankerblattrührer, Thermometer und Rückflußkühler werden 420 g Äthylacetat (mit 4 g Trockeneis entgast) vorgelegt und aufgeheizt. Bei 77°C werden 2,75 g 2,2-Azobis-(isobutyronitril) in 10 g Äthylacetat zugegeben und mit dem Zulauf eines Gemisches von 254,1 Methylacrylat, 254,1 g Vinylacetat, 41,8 g 3-Dimethylamino-2,2-dimethylpropyl-1-methacrylat, 2,75 g 2,2-Azobis-(isobutyronitril) und 1,1 g Mercaptoäthanol begonnen. Zulaufdauer ca. 2 Stunden. Nach Zulaufende sowie 2 Stunden danach werden nochmals je 2,75 g 2,2-Azobis-(isobutyronitril) in je 10 g Äthylacetat zugegeben. Die Sumpftemperatur wird dann weitere 8 Stunden bei 80°C gehalten. Man erhält eine klare, gelbe Lösung. Festkörper-Gehalt ca. 55 %, aktuelle Viskosität ca. 900 mPa.s; $\eta_{sp/c}$ in Aceton ca. 23 ml/g. $T_{\lambda max}$ = 55 °C.

Anwendungstechnische Prüfungen

AT 1: Herstellung des Tiefgrundes

Das in Beispiel 1 beschriebene Polymerisat wird unter Rühren mit Äthylacetat bis zu einem Festkörpergehalt von ca. 12 % verdünnt.

AT 2: Prüfung der Frühwasserfestigkeit

Ziegelsteine werden mit dem unter AT 1 beschriebenem Tiefgrund so vorgestrichen, daß auf der Oberfläche kein geschlossener Anstrichfilm entsteht, d.h. praktisch die gesamte Flüssigkeit eingesaugt wird. Die so vorbehandelten Ziegelsteine werden über Nacht getrocknet und dann mit einer handelsüblichen Fassadenfarbe auf Basis einer wäßrigen Dispersion auf Acrylharzbasis überstrichen. Nach einer Trockenzeit von 24 Stunden werden die Steine mit der der gestrichenen Seite gegenüberliegenden Seite nach unten so in eine mit Wasser gefüllte Kunststoffwanne gestellt, daß die nach oben zeigende, beschichtete Fläche nicht mit Wasser bedeckt ist.

Trotz mehrtägiger Lagerung unter diesen Bedingungen sind bei dem beschriebenen Anstrichsystem keinerlei Anstrichfehler wie z.B. Haftfestigkeitsverlust oder Blasenbildung festzustellen.

Gleich gute Ergebnisse werden erhalten, wenn der Tiefgrund aus dem in Beispiel 2 beschriebenen Lösungspolymerisat hergestellt wird.

Ähnliches gilt bei Verwendung des in Beispiel 3 beschriebenen Lösungspolymerisats. Hier werden ebenfalls bessere Ergebnisse erzielt als mit dem im Vergleichsbeispiel genannten Produkt. Die Frühwasserfestigkeit ist allerdings nicht ganz so gut wie die der in den Beispielen 1 und 2 genannten Systeme.

AT 3: Vergleichsbeispiel

Wird zur Herstellung des Tiefgrundes ein handelsübliches Copolymerisat auf Basis Vinylacetat-Dibutylmaleinat eingesetzt, ansonsten, aber wie unter AT 2 beschrieben verfahren, ist der Anstrich schon nach wenigen Stunden mit Blasen übersät.

Verfahren zur Beschichtung von saugfähigen Untergründen mit naßhaftenden Anstrichsystemen

## Patentansprüche

1. Verfahren zur Beschichtung von saugfähigen Untergründen aus mineralischen Materialien oder aus Holz mit naßhaftenden Beschichtungssystemen,

dadurch gekennzeichnet,

daß man auf dem saugfähigen Untergrund eine Grundierung G (Primer) bestehend aus der Lösung L eines Copolymerisats P aus radikalisch polymerisierbaren Monomeren der Formel I

$$CH_2 = \overset{R_1}{\overset{|}{C}} - Z \qquad \text{I}$$

worin $R_1$ für Wasserstoff oder einen Methylrest und

Z für einen Rest $- \overset{O}{\overset{\|}{C}} - OR_2$, worin $R_2$ einen gegebenfalls verzweigten, gegebenenfalls cyclischen Alkylrest mit 1 bis 10 Kohlenstoffatomen bedeutet,

oder für einen gegebenenfalls mit Alkylresten mit 1 bis 4 Kohlenstoffatomen substituierter Phenylrest oder für einen Rest

$- O - \overset{O}{\overset{\|}{C}} - R_3$, worin $R_3$ einen Alkylrest mit 1 bis 8 Kohlenstoffatomen bedeutet, steht und aus Monomeren der Formel II

$$CH_2=\overset{R_1'}{\overset{|}{C}}-\overset{O}{\overset{\|}{C}}-Y-A-NR_4R_5 \qquad II$$

worin $R_1'$ für Wasserstoff oder einen Methylrest,

Y für Sauerstoff oder einen Rest $-\overset{|}{N}R_6$, worin $R_6$ Wasserstoff oder einen Alkylrest mit 1 bis 6 Kohlenstoffatomen bedeutet,

A für eine gegebenenfalls verzweigte, aliphatische Kohlenwasserstoffbrücke mit 2 bis 10 Kohlenstoffatomen, und

$R_4$ und $R_5$ unabhängig voneinander für einen Alkylrest mit 1 bis 6 Kohlenstoffatomen steht oder $R_4$ und $R_5$ gemeinsam unter Einbeziehung des Stickstoffs und gegebenenfalls weiterer Stickstoff- oder Sauerstoffatome einen fünf- oder sechsgliedrigen, heterocyclischen Ring bilden, steht

in Anteilen von 0,5 - 20 Gew.-%, bezogen auf das gesamte Copolymerisat P

mit der Maßgabe, daß der $T_{\lambda max}$-Wert des Copolymerisats P im Bereich 20°C bis 80°C liegt und die reduzierte Viskosität $\eta_{spez/c}$ des Copolymerisats P im Bereich 20 ml/g bis 60 ml/g liegt, und 0 - 15 Gew.-%, bezogen auf die Lösung L eines Pigmentes oder eines organischen Farbstoffs,

in organischen Lösungsmitteln LM mit einem Siedepunkt unter Normalbedingungen zwischen 50 und 180°C, wobei der Anteil des Copolymerisats P an der Lösung L 5 - 30 Gew.-% ausmacht, aufbringt, und anschließend nach

erfolgter Trocknung auf die Grundierung an sich bekannte wäßrige Dispersionslacke D oder Dispersionsfarben DF aufträgt.

2. Verfahren gemäß Anspruch 1, dadurch gekennzeichnet, daß als Monomere der Formel I Methylmethacrylat und Butylacrylat verwendet werden.

3. Verfahren gemäß den Ansprüchen 1 und 2, dadurch gekennzeichnet, daß als Monomere der Formel 1 Methylmethacrylat, Butylacrylat und Butylmethacrylat verwendet werden.

4. Verfahren gemäß den Ansprüchen 1 bis 3, dadurch gekennzeichnet, daß als Monomere der Formel II Dialkylaminoalkylacrylate oder -methacrylate verwendet werden.

5. Verfahren gemäß den Ansprüchen 1 bis 4, dadurch gekennzeichnet, daß als Monomere der Formel II N-Dialkylamino-2,2-dimethylpropylmethacrylsäureester verwendet wird.

6. Verfahren gemäß den Ansprüchen 1 bis 5, dadurch gekennzeichnet, daß der Auftrag der Lösungen L so bemessen wird, daß auf einen $m^2$ Substratfläche 2 - 15 g Polymerisat P entfällt.